# EUROPEAN PATENT APPLICATION

(11) **EP 2 731 225 A2**
(43) Date of publication of application: **14.05.2014**
(21) Application number: 13192759.2
(22) Date of filing: 13.11.2013
(51) Int. Cl.: H02J 7/00

(54) **Method and apparatus for controlling discharge of secondary batteries**

(30) Priority: 13.11.2012 JP 2012249777
(71) Applicant: Yamaha Hatsudoki Kabushiki Kaisha, Shizuoka-ken 438-8501 (JP)
(72) Inventor: Saito, Ryo, Shizuoka, 438-8501 (JP); Arai, Juichi, Shizuoka, 438-8501 (JP)
(74) Representative: Stöckeler, Ferdinand

(57) **Abstract**

There is provided a method for controlling discharge of secondary batteries, controlling discharge of secondary batteries of which full capacitance by full charge is decreased due to deterioration caused by repetition of charge and discharge. The method has a step of discharging the secondary battery while cyclically repeating a discharge period and a resting period, when at least using the deteriorated secondary battery to connect to a load after charging the deteriorated second battery. The resting period is one second or longer and the discharge period is shorter than the resting period.

## Description

### Technical Field

The present invention relates to a method and an apparatus for controlling discharge of secondary batteries.

### Description of the Related Art

In recent years, secondary batteries that can be repeatedly charged and discharged plural times have been widely applied to daily-used items such as mobile phones and also to power-related items such as electric vehicles. In any items, the service life performance of secondary batteries is important, and number of studies and developments have thus far been made.

For example, JP-A-2009-254038 8 discloses a secondary battery module control apparatus having discharge restriction means for beginning to restrict the discharge of secondary battery modules when the module voltage drops to a lower limit monitoring value and then an assumed discharge permissible remaining time elapses by using determination results from lower limit monitoring-and-determination means and assumption results from discharge permissible remaining time assumption means. JP-A-2009-254038 describes that, according to the above apparatus, the excessive discharge or excessive charge of secondary battery cells is prevented, whereby the performance deterioration of secondary batteries can be suppressed.

In addition, JP-A-2012-016163 discloses a discharge control apparatus which allows a battery to be discharged until a threshold value higher than a value at which the remaining capacitance of the battery becomes zero, and discharges the battery until the remaining capacitance of the battery reaches zero in a case in which the discharge control apparatus receives an order for diagnosing the deterioration state of the battery from an external diagnosing machine, thereby preventing the deterioration of the battery due to excessive discharge. In addition, JP-A-2012-016163 describes the use of a battery that deteriorates such that the chargeable capacitance decreases by 50%.

### Disclosure of the Invention

### Problem that the Invention is to Solve

To ordinary consumers (end users), how long a product on which a secondary battery is mounted can operate (maximum available time), how large of an output the product can produce (the cruising range, speed or the like if the product is a vehicle) and the like on one full charge of the battery are important as directly perceivable performance. In a case in which a secondary battery deteriorates such that the full capacitance decreases by, for example, approximately 50%, users can sense the degradation of the performance of the secondary battery( that is, the degradation of the qualities as product) from the shortening of the maximum available time of the product, the shortening of the cruising range and the like.

As described in Japanese Patent publications JP-A-2009-254038 and JP-A-2012-016163, in the past studies and reports regarding the deterioration of secondary batteries, studies and developments were made in order to prevent the degradation of the qualities as products by preventing excessive charge or excessive discharge, and thus suppressing the deterioration of secondary batteries. However, there is no report found regarding techniques to suppress the degradation of the qualities as products of deteriorated secondary batteries compared with those of undeteriorated secondary batteries.

An object of the invention is to provide a method and an apparatus for controlling discharge which can suppress the degradation of the qualities as products of secondary batteries compared with those of undeteriorated secondary batteries even in a case in which the secondary batteries deteriorate.

### Means for Solving the Problem

According to an aspect of the invention, there is provided a method for controlling discharge of secondary batteries, controlling discharge of secondary batteries of which full capacitance by full charge is decreased due to deterioration caused by repetition of charge and discharge, the method comprising:
discharging the secondary battery while cyclically repeating a discharge period and a resting period, when at least using the deteriorated secondary battery to connect to a load after charging the deteriorated second battery,
wherein the resting period is one second or longer and the discharge period is shorter than the resting period.

According to another aspect of the invention, the resting period may be twice or more the discharge period.

According to another aspect of the invention, the discharge period may be less than 30 seconds.

According to another aspect of the invention, the secondary batteries may have deteriorated to 80% or less in terms of an initial capacitance ratio.

According to another aspect of the invention, the method may be carried out when the secondary battery is discharged at least at a current value near a maximum specification current value.

According to an aspect of the invention, there is provided an apparatus for controlling discharge of secondary batteries of which full capacitance by full charge is decreased due to deterioration caused by repetition of charge and discharge, comprising:
a discharge control unit that discharges secondary batteries while cyclically repeating a discharge period and a resting period,
wherein the resting period is one second or more and the discharge period is shorter than the resting period.

According to another aspect of the invention, the resting period may be twice or more the discharge period.

According to another aspect of the invention, the discharge period may be less than 30 seconds.

According to another aspect of the invention, the secondary battery may have deteriorated to at least 80% or less in terms of an initial capacitance ratio.

According to another aspect of the invention, the discharge control unit discharges the secondary batteries while cyclically repeating the discharge period and the resting period at least when the secondary batteries are discharged at a current value near a maximum specification current value.

According to the invention, it is possible to suppress the degradation of the qualities as products of secondary batteries compared with those of undeteriorated secondary batteries even when the secondary batteries have deteriorated.

### Brief Description of the Drawings

Fig. 1 is a block diagram illustrating a schematic configuration of an apparatus for controlling discharge of secondary batteries according to an exemplary embodiment of the invention.
Fig. 2 illustrates graphs for verifying changes in electric characteristics of secondary batteries before and after deterioration, (a) of Fig. 2 is a graph illustrating a relationship between full capacitance and the number of times of charge and discharge, (b) of Fig. 2 illustrates discharge curves when secondary batteries are continuously discharged at a maximum specification current value, and (c) of Fig. 2 is a view illustrating polarization characteristics which are curves illustrating relationships between currents and voltages of secondary batteries.
Fig. 3 illustrates graphs for verifying changes in polarization characteristics of secondary batteries before and after deterioration, (a) of Fig. 3 is a graph illustrating the polarization characteristics of an undeteriorated secondary battery, (b) of Fig. 3 is a graph illustrating the polarization characteristics of a deteriorated secondary battery, and (c) of Fig. 3 is a comparison view comparing the polarization characteristics before and after deterioration at the maximum specification current value.
Fig. 4 is a graph illustrating dependency of the polarization characteristics on time in a case in which discharge period is short.
Fig. 5 is a graph illustrating the dependency of the polarization characteristics on time in a case in which the discharge period is long.
Fig. 6 is a graph describing respective parameters of a discharge waveform used in examples.
Fig. 7 illustrates graphs showing results of carrying out continuous discharge and carrying out cyclic discharge on a deteriorated battery which is produced through a discharge cycle charge and discharge deterioration test.
Fig. 8 is a view illustrating relationships between the discharge period and discharge capacitance in a case in which a resting period is set to 5 seconds, a current value is set to 5ItA, and an environmental temperature is set to 25°C.
Fig. 9 is a view illustrating the relationships between the discharge period and the discharge capacitance in a case in which the resting period is set to 10 seconds, the current value is set to 5ItA, and the environmental temperature is set to 25°C.
Fig. 10 is a view illustrating the relationships between the discharge period and the discharge capacitance in a case in which the resting period is set to 30 seconds, the current value is set to 5ItA, and the environmental temperature is set to 25°C.
Fig. 11 is a graph of which horizontal axis is ratios of discharge period to resting period and of which vertical axis is discharge capacitance.
Fig. 12 illustrates graphs in which deterioration states of new secondary batteries are compared, (a) of Fig. 12 illustrates graphs showing results of charge and discharge cycle tests in which three kinds of discharge waveforms are used, and (b) of Fig. 12 illustrates graphs showing three kinds of discharge waveforms.

### Detailed Description of the exemplary embodiments

Hereinafter, examples of exemplary embodiments of the invention will be described in detail with reference to attached drawings. Meanwhile, in description of the drawings, similar or equivalent components will be given a similar reference sign, and will not be described again.

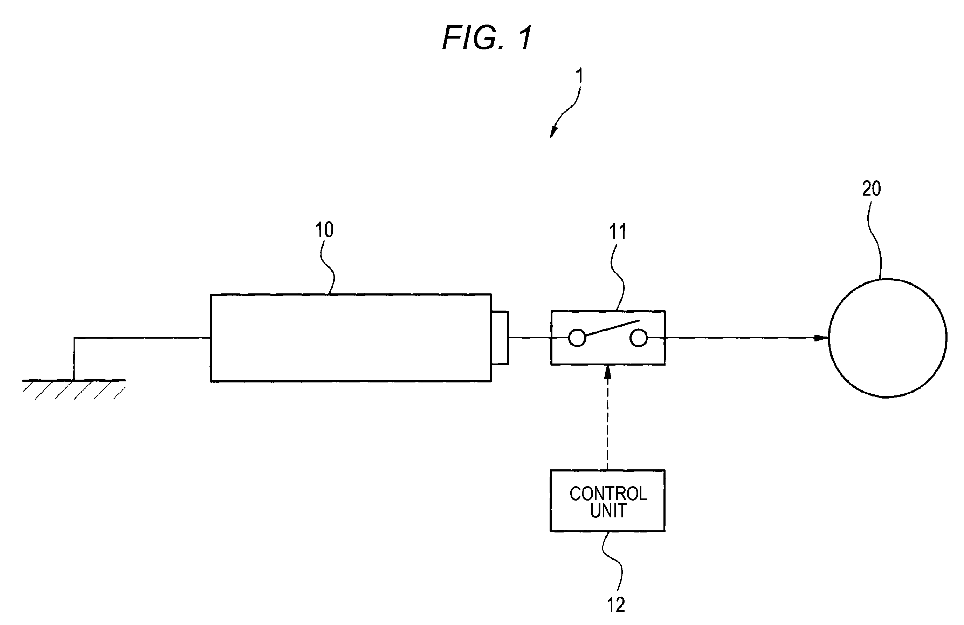

An discharge control apparatus 1 illustrated in Fig. 1 includes a switch unit 11 and a control unit 12 that controls the switch unit 11, and a secondary battery 10 which is detachably attached to the discharge control apparatus 1. The discharge control apparatus 1 is electrically connected to a load 20, and power of the secondary battery 10 is supplied to the load 20 through the switch unit 11. Examples of the load 20 include the respective electronic components such as liquid crystal displays mounted in mobile phones when the apparatus is used in daily-used items and motors mounted in electric vehicles when the apparatus is used in power-related items.

The secondary battery 10 is a chargeable battery that can be charged plural times by being connected to a charger. Examples thereof include a lithium ion battery, a nickel hydrogen battery, a nickel cadmium battery and a lead battery. When the secondary battery is repeatedly charged and discharged plural times, the full capacitance charged on one full charge gradually decreases, that is, the secondary battery gradually deteriorates.

Then, according to the exemplary embodiment of the present invention, it is preferable to carry out cyclic discharge which will be described later in detail, on the deteriorated secondary battery. The cyclic discharge may be carried out on, for example, the secondary battery 10 whose capacitance has decreased to at least 80% or less of the initial capacitance when the initial capacitance is considered as 100%(that is, the secondary battery 10 which has deteriorated to 80% or less in terms of the initial capacitance ratio). It is preferable to carry out the cyclic discharge before the capacitance of the secondary battery deteriorates to the previously-set level which indicates that it is time to exchange the second batteries. The unit of the initial capacitance may be the unit of electric capacitance [Ah] or the unit of power capacitance [Wh].

The switch unit 11 is a unit that switches the on/off of electric connection between the secondary battery 10 and the load 20 based on control signals sent from the control unit 12. When the switch unit 11 is on, the secondary battery 10 and the load 20 are electrically connected, and the power of the secondary battery 10 is supplied to the load 20. That is, the secondary battery 10 is discharged during the switch unit 11 being on.

On the other hand, when the switch unit 11 is off, the electric connection between the secondary battery 10 and the load 20 is cut so that the supply of the power from the secondary battery 10 to the load 20 is blocked. That is, the discharge of the secondary battery 10 is rested during the switch unit 11 being off.

The control unit 12 sends to the switch unit 11 control signals that on/off-operates the switch unit 11 so that the secondary battery 10 is repeatedly discharged and rested in a cyclical manner according to the previously-set conditions for controlling discharge. Regarding the relationship between the discharge period and the resting period, the resting period is set to be longer than the discharge period, and, furthermore, the resting period is set to be one second or more. In addition, the discharge period is set to less than 30 seconds. For example, the control unit 12 sets the discharge period to 0.5 seconds, the resting period is set to 1.0 second which is twice the discharge period.

The control unit 12 sends to the switch unit 11 control signals that on/off-operates the switch unit 11 so that the discharge period and the resting period are cyclically repeated.

Hereinafter, discharging batteries with repeated discharging and resting will be called cyclic discharge. The cycle of the cyclic discharge is set to several seconds or several minutes so that power is intermittently supplied to the load 20 while power is supplied to the load 20. Further, discharging batteries continuously will be called continuous discharge.

The cyclic discharge is preferably carried out when batteries are discharged at a current value near the maximum specification current value. Here, the current value near the maximum specification current value refers to a current value that is at least 80% of, and preferably 90% or more of the maximum specification current. When batteries are discharged at the current value near the maximum specification current value, it is possible to suppress concentration polarization (the detail of the concentration polarization will be described below) which may easily occur when the current value is large. Meanwhile, in the present exemplary embodiment, an example of the discharge control unit is configured by using the control unit 12 and the switch unit 11.

When the deteriorated secondary battery 10 is fully charged, and then discharged by being connected to the load 20 (for example, when the load 20 is a motor of an electric vehicle, a time period of approximately several minutes to two hours), the discharge control apparatus 1 of the present exemplary embodiment configured as described above cyclically discharges the secondary battery 10 while repeatedly discharging and resting the secondary battery in a cyclical manner using the control unit 12 according to the conditions for controlling discharge. When the secondary battery is cyclically discharged, the discharge capacitance of the deteriorated secondary battery 10 increases compared with a discharge capacitance obtained in the case of the continuous discharge.

Therefore, when the load 20 is one of the respective electronic components such as liquid crystal displays mounted in mobile phones, the operation time during which the mobile phones operate on one full charge is maintained to be long. Further, when the load 20 is a motor mounted in an electric vehicle, the cruising range that the electric vehicle can travel on one full charge is maintained to be long. As such, by controlling the discharge of the deteriorated secondary battery 10 so as to carry out cyclic discharge according to the conditions of the discharge control, it is possible to suppress the degradation of the qualities as products.

In other words, to ordinary consumers, whether or not the mounted secondary batteries deteriorate is merely a parameter that the consumers can sense as a result of the performance of the product, for example, the maximum available time, the cruising range of the vehicle or the like being shortened. In summary, ordinary consumers cannot sense whether or not the secondary batteries deteriorate as long as the performance such as the maximum available time is maintained. Consequently, to consumers, whether or not the batteries themselves deteriorate are not important.

Generally, secondary batteries 10 which are easily deteriorate are cheap compared with rarely deteriorating secondary batteries 10. According to the discharge control apparatus 1 of the exemplary embodiment, the deteriorated secondary battery 10 can be used in a condition where the discharge capacitance is increased relative to the discharge capacitance obtained in a case in which the continuous discharge is carried out. Thus, costs can be reduced while maintaining the qualities as products.

According to the discharge control apparatus 1 of the exemplary embodiment, the discharge period is set to, for example, 0.5 seconds, and the resting period is set to 1.0 second, which is twice the discharge period. As such, when the resting period is set to twice the discharge period or more, the discharge capacitance of deteriorated secondary batteries 10 can be increased compared with the discharge capacitance obtained in the case of the continuous discharge.

In the discharge control apparatus 1 of the exemplary embodiment, a configuration in which the control unit 12 cyclically discharges the deteriorated secondary battery 10 has been described, but the present invention is not limited to the above configuration, and the control unit 12 may control the undeteriorated secondary battery 10 to be cyclically discharged. This is because, even when the undeteriorated secondary battery 10 is controlled to be cyclically discharged, there is no influence of accelerating the deterioration of the secondary battery 10. Therefore, according to this configuration, it is not necessary to provide a configuration in which the discharge control is switched from the continuous discharge to the cyclic discharge depending on whether or not the secondary battery 10 deteriorates, and it is possible to simplify the entire configuration of control systems.

The inventors found that, according to the above described method, it is possible to increase the discharge capacitance obtained by fully charging and then cyclically discharging the deteriorated secondary battery 10 compared with the discharge capacitance obtained by fully charging and then continuously discharging the deteriorated secondary battery 10. In addition, the inventors found that there is no influence of accelerating the deterioration of the secondary battery 10 even when the undeteriorated secondary battery 10 is cyclically discharged.

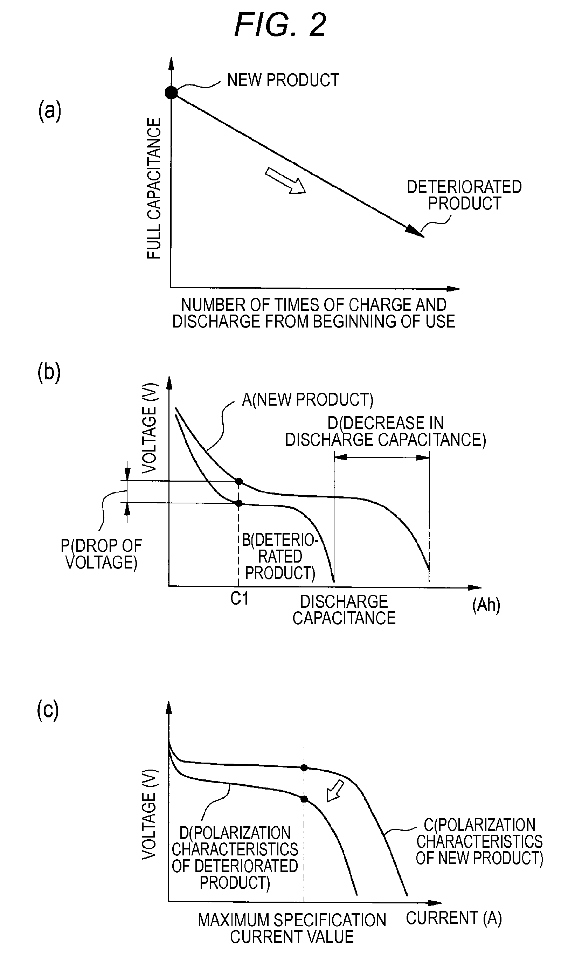

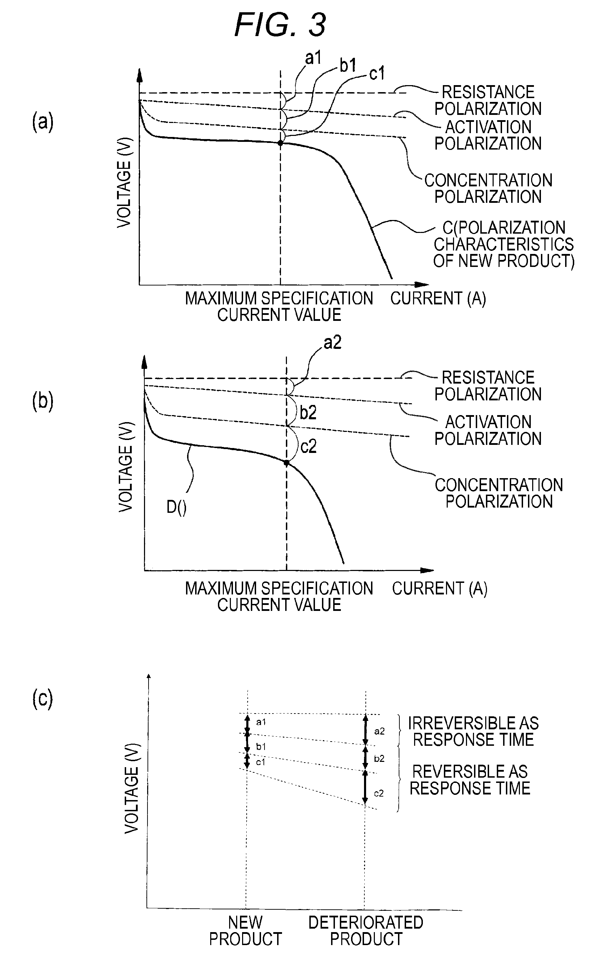

Next, a principle of increasing the discharge capacitance of the deteriorated secondary battery 10 obtained in the case of the cyclic discharge compared with the discharge capacitance obtained in the case of the continuous discharge will be described with reference to Figs. 2 and 3.

Fig. 2 illustrates graphs for verifying changes in the electric characteristics of secondary batteries before and after deterioration. In Fig. 2, (a) of Fig. 2 is a graph illustrating the relationship between full capacitance and the number of times of charge and discharge, (b) of Fig. 2 illustrates discharge curves when secondary batteries are continuously discharged at the maximum specification current value, and (c) of Fig. 2 is a view illustrating the polarization characteristics which are curves illustrating the relationships between the currents and voltages of secondary batteries.

The black circle on the graph in (a) of Fig. 2 indicates the full capacitance of a secondary battery which has not been charged and discharged after being used(that is, in a new product state). The black triangle on the graph in (a) of Fig. 2 indicates the full capacitance of a secondary battery which has been charged and discharged plural times after being used (that is, in a deteriorated product state).

As illustrated in the graph, secondary batteries have a tendency for the full capacitance to decrease as the number of times of charge and discharge increases. This is considered to be because, while the secondary battery is repeatedly charged and discharged, the polarization characteristics change due to causes such as accumulation of by-products on surfaces of electrodes.

Graph A in (b) of Fig. 2 is a discharge curve when the undeteriorated secondary battery is continuously discharged at the maximum specification current value. Graph B in (b) of Fig. 2 is a discharge curve when the deteriorated secondary battery is continuously discharged at the maximum specification current value.

Comparing Graph A with Graph B, it can be confirmed that the discharge capacitance obtained by continuously discharging the deteriorated secondary battery is smaller than the discharge capacitance obtained by continuously discharging the undeteriorated secondary battery by a width indicated by reference sign D.

In addition, it can be confirmed that the voltage values at a predetermined discharge capacitance value C1 before and after deterioration become different by a width indicated by reference sign P, and the voltage drops in the deteriorated secondary battery.

As such, when the secondary battery deteriorates, since the full capacitance, discharge capacitance or power decreases as described above, a number of studies and reports for preventing the deterioration of secondary batteries have been reported. However, the inventors paid attention the changes in the polarization characteristics before and after deterioration illustrated in (c) of Fig. 2, and found a method for efficiently discharging deteriorated secondary batteries.

Fig. 3 illustrates graphs for verifying changes in the polarization characteristics of secondary batteries before and after deterioration. In Fig. 3, (a) of Fig. 3 is a graph illustrating the polarization characteristics of an undeteriorated secondary battery, (b) of Fig. 3 is a graph illustrating the polarization characteristics of a deteriorated secondary battery, and (c) of Fig. 3 is a comparison view comparing the polarization characteristics before and after deterioration at the maximum specification current value.

First, three kinds of polarization (resistance components) that configure the polarization characteristics of secondary batteries will be described. The polarization characteristics of secondary batteries are classified into resistance polarization, activation polarization and concentration polarization.

The resistance polarization refers to polarization caused by the electric resistance of electrolytes or electrodes, and is also called a pure resistance as a resistance component of a voltage drop occurring when electrons or ion currents migrate in electrodes or electrolytic solutions.

From (a) and (b) of Fig. 3, it can be confirmed that the resistance polarization occurs regardless of the current value. Further, it can be confirmed that the resistance polarization has a tendency of increasing as the current value increases. Therefore, the voltage drop becomes larger as the current value increases.

The resistance polarization occurs at almost the same time as the beginning of discharge, that is, several microseconds (µs) later. In addition, it is difficult to suppress the voltage drop caused by the resistance polarization in actual operating situations.

The activation polarization refers to polarization caused by the activation energy of electrode reactions. The activation polarization is also called a reaction resistance as a resistance component of the voltage drop when a chemical reaction on an electrode surface reaches the equilibrium state. Examples of the chemical reaction are, bonding between electrons and lithium ions (Li+), or an electron detachment reaction from lithium (Li).

From (a) and (b) of Fig. 3, it can be confirmed that the activation polarization occurs regardless of the current value, and has a tendency of increasing as the current value. Therefore, the voltage drop becomes larger as the current value increases. More specifically, it can be confirmed that the voltage tends to significantly drop at small current values (near 0) and then gradually drop as the current value increases.

The activation polarization occurs immediately after the beginning of discharge, that is, several milliseconds (ms) later. In addition, the discharge control of the invention can suppress the voltage drop caused by the activation polarization.

The concentration polarization refers to polarization caused by the concentration of reactants on the electrode surface decreasing as the electrode reaction progresses. The concentration polarization is also called a diffusion resistance as a resistance component of a voltage drop occurring due to the influences of the supply rate of reaction-participating substances to electrodes or the diffusion rate of products when the concentrations of the reaction-participating substances change from the equilibrium state as currents flow.

From (a) and (b) of Fig. 3, it can be confirmed that the concentration polarization occurs regardless of the current value, and has a tendency of drastically increasing when the current value exceeds a certain value, thereby further decreasing the voltage.

The concentration polarization occurs after a short time from the beginning of discharge, that is, several seconds (µs) later. In addition, the discharge control of the invention can suppress the voltage drop caused by the concentration polarization.

Graph C illustrated in (a) of Fig. 3 illustrates the polarization characteristics of a new secondary battery. As illustrated in (a) of Fig. 3, the polarization characteristics at the maximum specification current value includes resistance polarization a1, activation polarization b1 and concentration polarization c1. As illustrated in (a) of Fig. 3, in the state of the new product, it can be confirmed that the activation polarization b1 is most dominant, the resistance polarization a1 is second most dominant, and the proportion of the concentration polarization c1 is smallest.

Graph D illustrated in (b) of Fig. 3 illustrates the polarization characteristics of a deteriorated secondary battery. As illustrated in (b) of Fig. 3, the polarization characteristics at the maximum specification current value includes resistance polarization a2, activation polarization b2 and concentration polarization c2. As illustrated in (b) of Fig. 3, a combination of substantially the same proportions of the activation polarization b2 and the concentration polarization c2 accounts for approximately 80% of the entire voltage drop, and the proportion of the concentration polarization a2 is smallest.

(c) of Fig. 3 is a comparison view that compares the polarization characteristics of a new secondary battery at the maximum specification current value with the polarization characteristics of a deteriorated secondary battery at the maximum specification current value. First, comparing the resistance polarization a1 of the new product with the resistance polarization a2 of the deteriorated product, it can be confirmed that the resistance polarization increases after deterioration.

Next, comparing the activation polarization b1 of the new product with the activation polarization b2 of the deteriorated product, it can be confirmed that the activation polarization b2 of the deteriorated product increases compared with the activation polarization b1 of the new product.

When comparing the concentration polarization c1 of the new product with the concentration polarization c2 of the deteriorated product, it can be confirmed that the concentration polarization c2 of the deteriorated product increases compared with the concentration polarization c1 of the new product. In addition, it can be confirmed that the increase in the concentration polarization is larger than the increase in the resistance polarization or the activation polarization.

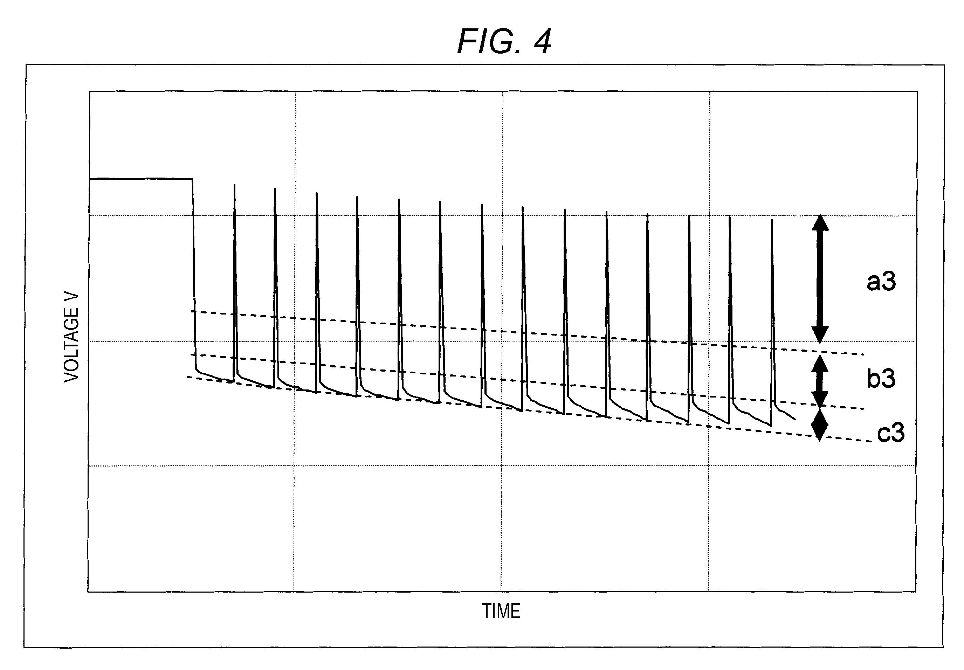

Fig. 4 is a graph illustrating the dependency of the polarization characteristics on time in a case in which discharge period is short. Reference sign a3 represents the resistance polarization, reference sign b3 represents the activation polarization, and reference sign c3 represents the concentration polarization. From the graph, it is found that, in a case in which each discharge period is short, the activation polarization b3 and the concentration polarization c3 do not significantly increase. Consequently, the resistance polarization a3 becomes dominant.

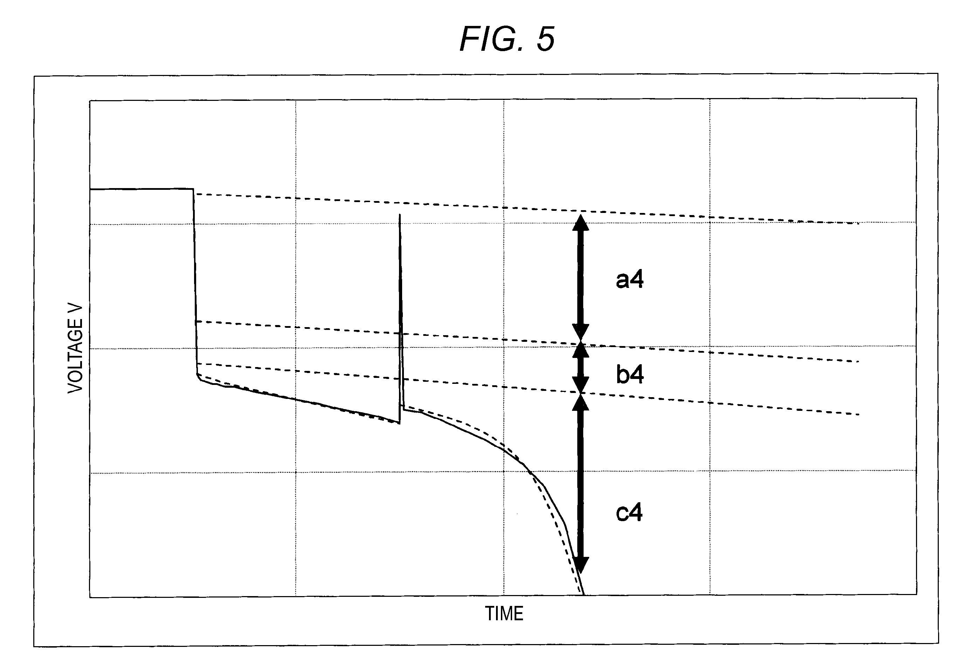

Fig. 5 is a graph illustrating the dependency of the polarization characteristics on time in a case in which the discharge period is long. Reference sign a4 represents the resistance polarization, reference sign b4 represents the activation polarization, and reference sign c4 represents the concentration polarization. From the graph, it is found that, in a case in which each discharge period is long, the activation polarization b4 and the concentration polarization c4 which significantly change over time further increase than the resistance polarization a4 which slightly changes over time. Consequently, the activation polarization b4 and the concentration polarization c4 become dominant.

From the above verification results, the inventors found that a large part of the increase in the polarization (voltage drop) in the polarization characteristics of the deteriorated secondary battery is caused by the increases in the activation polarization and the concentration polarization (particularly, the increase in the concentration polarization) which are reversible components in terms of response time. As a result, it was found that, when at least the concentration polarization of the deteriorated secondary battery can be suppressed, the voltage drop can be suppressed. In addition, it was found that, when the influence of at least the concentration polarization can be suppressed, it is possible to increase the discharge capacitance of the deteriorated secondary battery compared with the discharge capacitance obtained in the case of the continuous discharge.

In addition, regarding a method for suppressing the influence of the concentration polarization, the inventors paid attention to a fact that the concentration polarization is a reversible phenomenon occurring every several seconds, and found that, when the discharge is rested for a resting period which is several seconds, that is, one second or more, and set to be longer than the discharge period, the voltage drop caused by the concentration polarization can be suppressed. Therefore, it was found that, even for a deteriorated secondary battery, when resting for one second or more and discharging for a discharge period shorter than the resting period are cyclically repeated, the voltage drop caused by the concentration polarization is continuously suppressed, the entire voltage drop after deterioration is suppressed to approximately the same level as the voltage drop of a new product. Consequently, the discharge capacitance of a deteriorated secondary battery can be increased compared with the discharge capacitance obtained in the case of the continuous discharge.

As described above, when resting for one second or more and discharging for a discharge period shorter than the resting period are cyclically repeated, and the discharge is rested during the resting period set to be longer than the discharge period, the discharge capacitance of a deteriorated secondary battery can be increased compared with the discharge capacitance obtained in the case of the continuous discharge.

In addition, it was found that, when one second or more of the resting period is ensured for each cycle during discharging, an effect of reliably cancelling the influence of the concentration polarization can be obtained. Therefore, it was found that an effect of reliably increasing the discharge capacitance by using a simple control system in which a switch unit that switches the on/off of the electric connection can be obtained.

Next, discharge control conditions (the relationship between the discharge period and the resting period) set in the control unit 12 will be verified using examples.

### (Example)

First, a deteriorated battery was produced using a commercially available 18650 battery of 2Ah through "a discharge cycle charge and discharge deterioration test" in which chargeing at 1 ItA (the unit of the charge and discharge current value) and discharging at 1 ItA are repeated in an environment of 45°C. In addition, a deteriorated battery was produced by using the same commercially available 18650 battery of 2Ah through a 4.2 V storage test in an environment of 60°C.

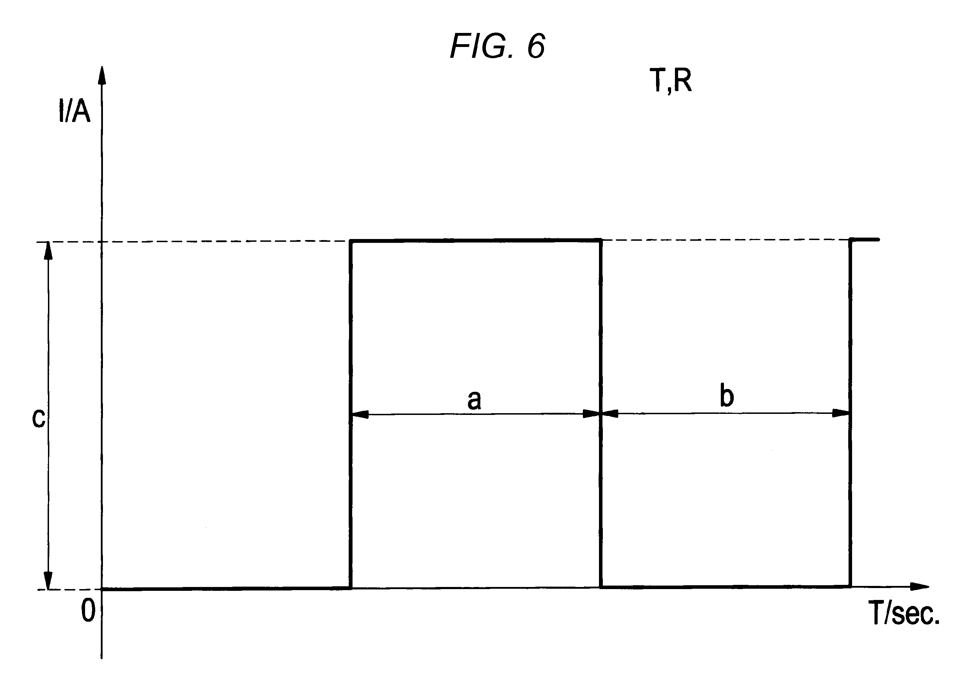

The discharge performance of the deteriorated batteries produced in the above manner and a new battery were evaluated by fixing charge conditions to "CC(0.21 ItA)-CV4.2 V / 0.02 ItA cut off" in an environment of 25°C, and then changing the respective parameters illustrated in Fig. 6 (a: discharge period (seconds), b: resting period (seconds), c: current value (ItA), T: environmental temperature (°C), R: the degree of deterioration (initial relative state of charge (%Wh))).

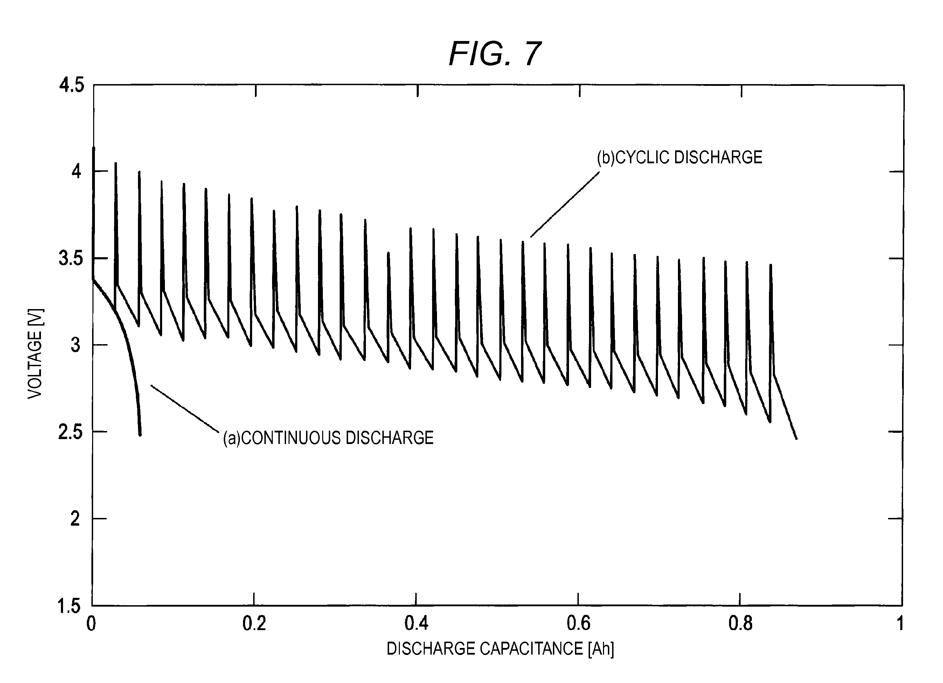

Fig. 7 illustrates the result of the continuous discharge and the result of the cyclic discharge of a deteriorated battery which has been produced through the discharge cycle charge and discharge deterioration test and fully charged. Graph A in Fig. 7 is a discharge curve of a case in which the battery was continuously discharged at a current value of 5ItA, and Graph B in Fig. 7 is a discharge curve of a case in which the battery is cyclically discharged by repeating discharging for a discharge period of 10 seconds and resting for a resting period of 30 seconds at a current value of 5 ItA in a cyclical manner.

While the discharge capacitance was less than 0.1 Ah in Graph A illustrating the results of the continuous discharge, the discharge capacitance was 0.8 Ah or more in Graph B illustrating the results of the cyclic discharge. Therefore it was found that the cyclic discharge increases the capacitance by approximately 8 times or more. This proposes that the irreversible resistance component is not the only cause for the deterioration of the secondary battery as described above. That is, it is found that the discharge capacitance of the cyclic discharge can be increased compared with the discharge capacitance obtained in the case of the continuous discharge by suppressing the voltage drop caused by the concentration polarization which is a reversible reaction.

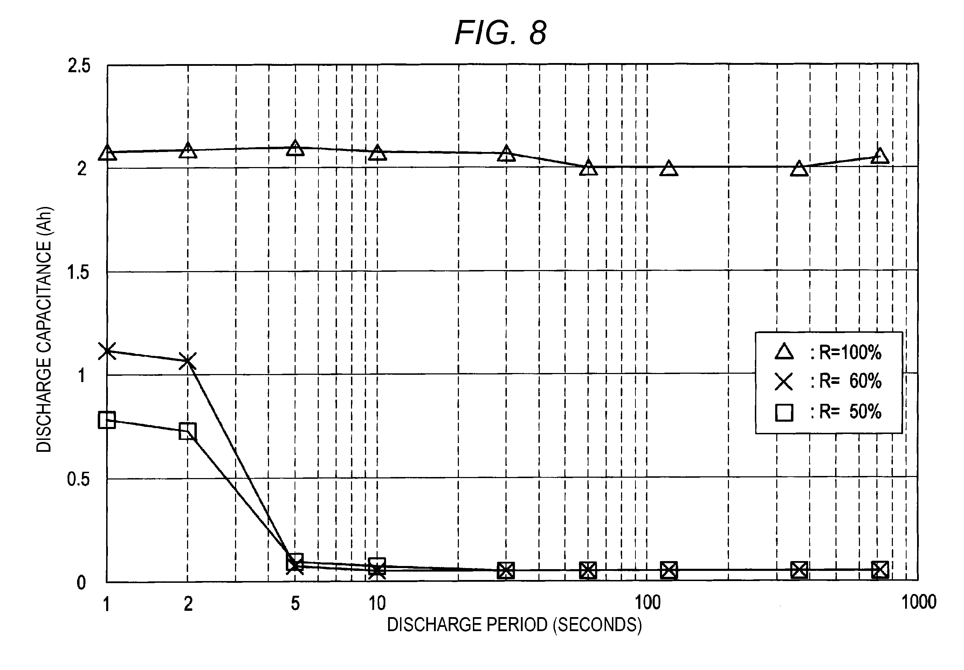

Next, the influences of the respective parameters illustrated in Fig. 6 on the discharge capacitance were investigated by changing the parameters. Fig. 8 is a view illustrating the relationships between the discharge period (parameter a) and the discharge capacitance in a case in which a resting period (parameter b) is set to 5 seconds, a current value (parameter c) is set to 5 ItA, and an environmental temperature (parameter T) is set to 25°C. Fig. 8 illustrates a total of three graphs which are a graph for which the parameter R that indicates the degree of deterioration is 100% (new product), a graph for which the parameter R is 60% (a state in which the capacitance becomes 60% of that of the new product; hereinafter, called 60% of the initial capacitance) and a graph for which the parameter R is 50% (a state in which the capacitance is decreased to 50% of that of the new product; hereinafter, called 50% of the initial capacitance).

From Fig. 8, it is found that, when the parameter R is 100%, that is, when the secondary battery is a new product, the discharge capacitance does not significantly change even when the discharge period changes.

In addition, it is found that, when the parameter R is 60%, that is, the secondary battery is in a state of 60% of the initial capacitance, a discharge capacitance of approximately 1 Ah is obtained until a discharge period of 2 seconds with respect to a resting period of 5 seconds; however, when the discharge period becomes 5 seconds, the discharge capacitance is rarely obtained.

In addition, when the secondary battery is in a state of 50% of the initial capacitance as well, similarly, a discharge capacitance of approximately 0.7 Ah is obtained until a discharge period of 2 seconds with respect to a resting period of 5 seconds; however, when the discharge period becomes 5 seconds, the discharge capacitance is rarely obtained.

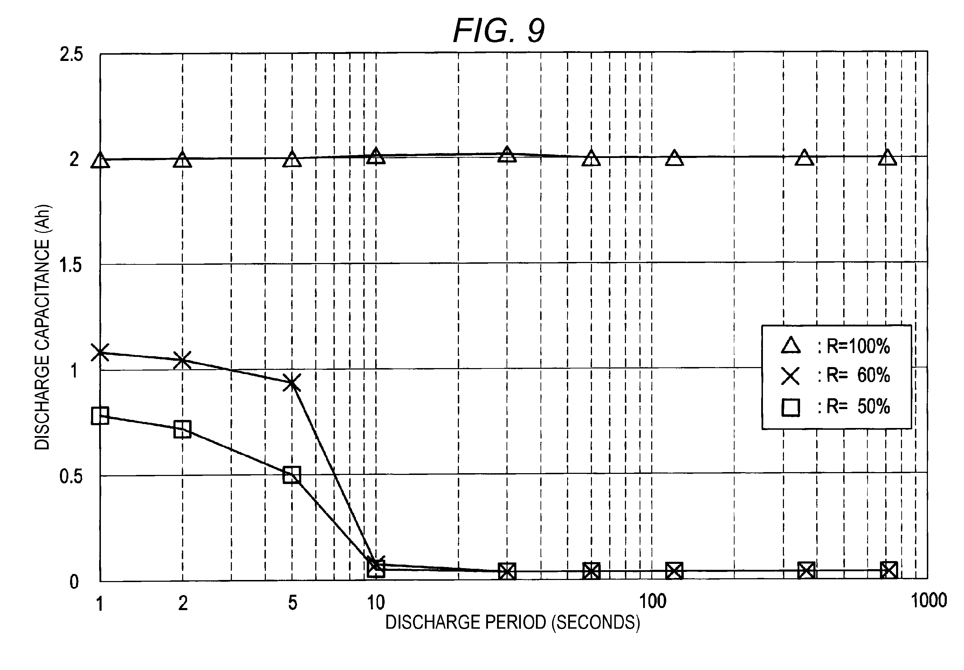

Fig. 9 is a view illustrating the relationships between the discharge period (parameter a) and the discharge capacitance in a case in which the resting period (parameter b) is set to 10 seconds, the current value (parameter c) is set to 5ItA, and the environmental temperature (parameter T) is set to 25°C. Similarly to Fig. 8, Fig. 9 illustrates a total of three graphs which are a graph for which the parameter R that indicates the degree of deterioration is 100%, a graph for which the parameter R is 60% of the initial capacitance and a graph for which the parameter R is 50% of the initial capacitance.

From Fig. 9, it is found that, when the parameter R is 100%, that is, when the secondary battery is a new product, the discharge capacitance does not significantly change even when the discharge period changes.

In addition, it is found that, when the parameter R is 60%, that is, the secondary battery is in a state of 60% of the initial capacitance, a discharge capacitance of approximately 1 Ah is obtained until a discharge period of 5 seconds with respect to a resting period of 10 seconds; however, when the discharge period becomes 10 seconds, the discharge capacitance is rarely obtained.

In addition, when the secondary battery is in a state of 50% of the initial capacitance as well, similarly, a discharge capacitance of approximately 0.5 Ah is obtained until a discharge period of 5 seconds with respect to a resting period of 10 seconds; however, when the discharge period becomes 10 seconds, the discharge capacitance is rarely obtained.

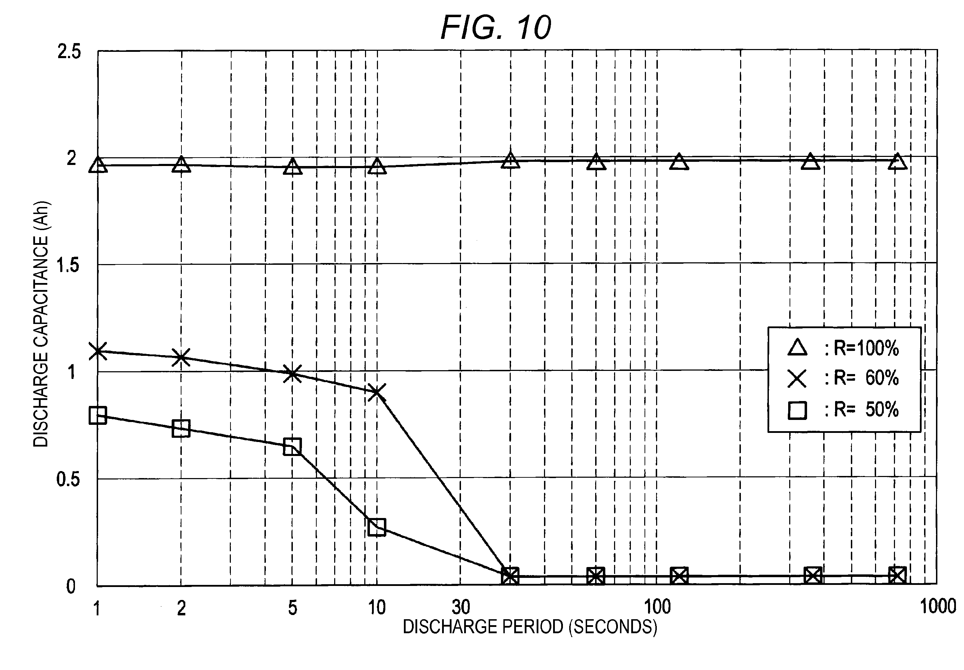

Fig. 10 is a view illustrating the relationships between the discharge period (parameter a) and the discharge capacitance in a case in which the resting period (parameter b) is set to 30 seconds, the current value (parameter c) is set to 5ItA, and the environmental temperature (parameter T) is set to 25°C. Similarly to Fig. 8, Fig. 10 illustrates a total of three graphs which are a graph for which the parameter R that indicates the degree of deterioration is 100%, a graph for which the parameter R is 60% of the initial capacitance and a graph for which the parameter R is 50% of the initial capacitance.

From Fig. 10, it is found that, when the parameter R is 100%, that is, when the secondary battery is a new product, the discharge capacitance does not significantly change even when the discharge period changes.

In addition, it is found that, when the parameter R is 60%, that is, the secondary battery is in a state of 60% of the initial capacitance, a discharge capacitance of approximately 1 Ah is obtained until a discharge period of 10 seconds with respect to a resting period of 30 seconds; however, when the discharge period becomes 30 seconds, the discharge capacitance is rarely obtained.

In addition, when the secondary battery is in a state of 50% of the initial capacitance as well, similarly, a discharge capacitance of approximately 0.3 Ah is obtained until a discharge period of 10 seconds with respect to a resting period of 30 seconds; however, when the discharge period becomes 30 seconds, the discharge capacitance is rarely obtained.

From the results of Figs. 8 to 10, it is found that, when the resting period that is longer than at least the discharge period is ensured in the cyclic discharge, some of the influence of the concentration polymerization is cancelled, and an effect of increasing the discharge capacitance to a certain extent compared with the discharge capacitance obtained in the case of the continuous discharge is observed.

In addition, it is found that, when a resting period that is twice or more the discharge period is ensured, the influence of the concentration polymerization is almost cancelled, the voltage drop is significantly suppressed, and the discharge capacitance can be increased compared with the discharge capacitance obtained in the case of the continuous discharge.

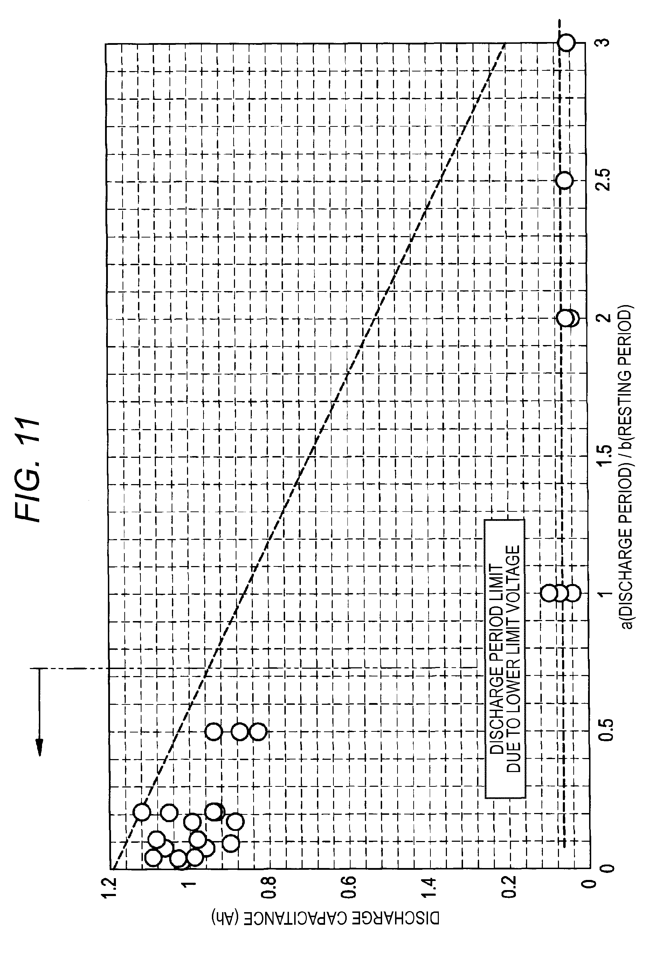

Fig. 11 illustrates a graph plotting some of the experiment results of the example. The horizontal axis of Fig. 11 is the ratios of the discharge period to the resting period (the parameter a / the parameter b). The vertical axis of Fig. 11 is the discharge capacitance.

As illustrated in Fig. 11, it can be confirmed that, when the ratio of the parameter a / the parameter b is 0.5 or less, a certain discharge capacitance is obtained. This is considered to be because, in a case in which the ratio of the parameter a / the parameter b is 0.5 or less, a resisting period that is twice or more the discharge period is ensured. Therefore, the voltage drop caused by the accumulated resistance component (mainly the concentration polarization) is recovered by the discharge, and the lower limit voltage is not reached.

On the other hand, in a case in which the ratio of the parameter a / the parameter b is 1.0, it can be confirmed that there are cases in which the discharge capacitance is maintained, and, also, there are cases in which the discharge capacitance is rarely obtained. In addition, in a case in which the ratio of the parameter a / the parameter b is larger than 1.0, the discharge capacitance is rarely obtained. This is considered to be because the resting period is not sufficient compared with the discharge period such that the voltage drop caused by the accumulated resistance component (mainly the concentration polarization) is not sufficiently recovered by the discharge, and the lower limit voltage is reached.

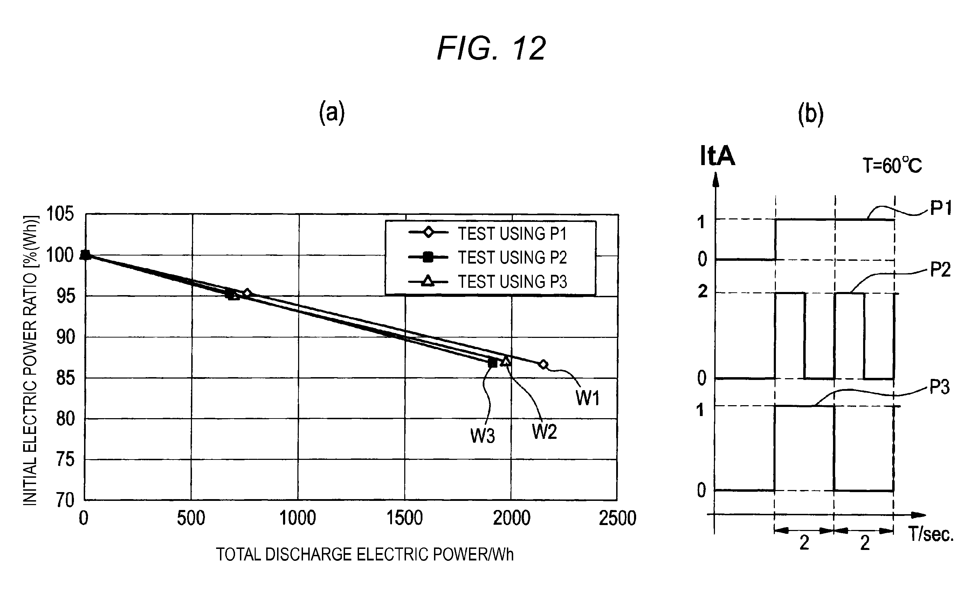

Fig. 12 illustrates graphs comparing the deterioration tendencies of new secondary batteries. (a) of Fig. 12 illustrates the results of the charge and discharge cycle tests in which three kinds of discharge waveforms P1 to P3 are used, and (b) of Fig. 12 illustrates the waveform shapes of the respective discharge waveforms P1 to P3.

The discharge waveform P1 in (b) of Fig. 12 has a shape in which the secondary battery is continuously discharged at 1 ItA. The discharge waveform P2 has a pulse shape in which one second of discharge and one second of resting are repeated at 2 ItA. The discharge waveform P3 has a pulse shape in which two seconds of discharge and two seconds of resting are repeated at 2 ItA. As such, in order to ensure that the respective test results are fairly evaluated, the duty ratios of the discharge waveforms P1 to P3 are set the same.

Graph W1 in (a) of Fig. 12 is a graph obtained by charging the secondary battery using a certain charge method, continuously discharging the secondary battery for one hour using the discharge waveform P1. The remaining electric power and the total discharged electric power at that time are measured. Then, the initial electric power ratio (%) that is a ratio of the remaining electric power to the initial electric power of the battery is computed Subsequently, the same test is repeated. Meanwhile, the vertical axis represents the initial electric power ratio, and the horizontal axis represents the total discharged electric power.

Graph W2 is a graph obtained by charging the secondary battery using a certain charge method, cyclically discharging the secondary battery for one hour using the discharge waveform P2. The remaining electric power and the total discharged electric power at that time are measured. Then, the initial electric power ratio (%) that is the ratio of the remaining electric power to the initial electric power of the battery is computed. Subsequently, the same test is repeated.

Graph W3 is a graph obtained by charging the secondary battery using a certain charge method, cyclically discharging the secondary battery for one hour using the discharge waveform P3. The remaining electric power and the total discharged electric power at that time are measured. Then, the initial electric power ratio (%) that is the ratio of the remaining electric power to the initial electric power of the battery is computed. Subsequently, the same test is repeated.

Meanwhile, the tests to obtain the graphs W1 to W3 are carried out at an environmental temperature of 60°C or lower, and are carried out under the same conditions except that the discharge waveforms being used are different. That is, the respective conditions are made to be the same so that, if the difference in the discharge waveform did not have any influence on deterioration, the same graph is obtained.

As illustrated in (a) of Fig. 12, the graphs W1 to W3 illustrate approximately the same slope. As such, the graphs W1 to W3 illustrate approximately the same test results, and, from this fact, it can be confirmed that the cyclic discharge in which the discharge waveform P2 or P3 is used does not have any influence of accelerating the deterioration of secondary batteries.

From the results of the example described above, the inventors found that the discharge capacitance obtained by fully charging a deteriorated secondary battery, and then cyclically discharging the battery can be increased compared with the discharge capacitance obtained by fully charging an undeteriorated secondary battery, and then continuously discharging the battery. In addition, the inventors also found that, even when an undeteriorated secondary battery is cyclically discharged, there is no influence of accelerating the deterioration of the secondary battery.

As a result of carrying out a variety of verifications based on the above knowledge, the inventors found that, when a deteriorated secondary battery is charged and then used by being connected to a load, the discharge capacitance can be increased compared with the discharge capacitance obtained in the case of the continuous discharge by discharging the secondary battery while cyclically repeating the discharge period and the resting period, setting the resting period to be one second or more, and setting the discharge period to be shorter than the resting period, and it is possible to suppress the qualities as products from degrading more than those of an undeteriorated secondary battery.

In addition, it was found that, in the cyclic discharge, the discharge capacitance of a deteriorated secondary battery can be increased compared with the discharge capacitance obtained in the case of the continuous discharge by setting the resting period to be twice or more the discharge period, and it is possible to maintain the qualities as products at substantially those of new products.

Thus far, the invention has been described in detail and with reference to the specific exemplary embodiment, but it is clear to a person skilled in the art that a variety of modifications or corrections can be added within the concept and scope of the invention.

## Claims

1. A method for controlling discharge of secondary batteries, controlling discharge of secondary batteries of which full capacitance by full charge is decreased due to deterioration caused by repetition of charge and discharge, the method comprising:
discharging the secondary battery while cyclically repeating a discharge period and a resting period, when at least using the deteriorated secondary battery to connect to a load after charging the deteriorated second battery,
wherein the resting period is one second or longer and the discharge period is shorter than the resting period.

2. The method for controlling discharge of secondary batteries according to Claim 1,
wherein the resting period is twice or more the discharge period.

3. The method for controlling discharge of secondary batteries according to Claim 1 or 2,
wherein the discharge period is less than 30 seconds.

4. The method for controlling discharge of secondary batteries according to Claim 1 or 2,
wherein the secondary batteries have deteriorated to 80% or less in terms of an initial capacitance ratio.

5. The method for controlling discharge of secondary batteries according to Claim 1 or 2,
wherein the method is carried out when the secondary battery is discharged at least at a current value near a maximum specification current value.

6. An apparatus for controlling discharge of secondary batteries of which full capacitance by full charge is decreased due to deterioration caused by repetition of charge and discharge, comprising:
a discharge control unit that discharges secondary batteries while cyclically repeating a discharge period and a resting period,
wherein the resting period is one second or more and the discharge period is shorter than the resting period.

7. The apparatus for controlling discharge of secondary batteries according to Claim 6,
wherein the resting period is twice or more the discharge period.

8. The apparatus for controlling discharge of secondary batteries according to Claim 6 or 7,
wherein the discharge period is less than 30 seconds.

9. The apparatus for controlling discharge of secondary batteries according to Claim 6 or 7,
wherein the secondary battery has deteriorated to at least 80% or less in terms of an initial capacitance ratio.

10. The apparatus for controlling discharge of secondary batteries according to Claim 6 or 7,
wherein the discharge control unit discharges the secondary batteries while cyclically repeating the discharge period and the resting period at least when the secondary batteries are discharged at a current value near a maximum specification current value.
